# EUROPÄISCHE PATENTANMELDUNG

(11) **EP 1 145 910 A2**
(43) Veröffentlichungstag der Anmeldung: **17.10.2001**
(21) Anmeldenummer: 01108675.8
(22) Anmeldetag: 06.04.2001
(51) Int. Cl.: B60R 13/02, B32B 5/26, D04H 13/00, D06N 7/00

(54) **Fahrzeug-Innenauskleidungsteil**

(30) Priorität: 11.04.2000 DE 10018004
(71) Anmelder: Ideal Automotive GmbH, 96052 Bamberg (DE)
(72) Erfinder: Hessler, Olaf, 39646 Oebisfelde (DE); Fechner, Stefan, 95213 Münchberg (DE)
(74) Vertreter: Gaiser, Hartmut, Dipl.-Ing.

(57) **Zusammenfassung**

Ein Auskleidungsteil 3 aus einem Textil mit einer rückseitigen Verfestigung 6 für einen Fahrzeuginnenraum soll sortenrein recycelbar, weitgehend geruchlos, preiswert herstellbar und hinreichend abriebfest sein. Hierfür ist das Auskleidungsteil 3 aus einem Vlies 1 oder Polvlies, Gewebe, Gewirke oder einem getufteten Produkt hergestellt, dessen Fasern 2 im wesentlichen nur mechanisch, bindemittelfrei und kleberfrei gebunden sind, und bei dem überwiegend alle Fasern aus dem gleichen thermoplastischen Kunststoff bestehen und Einkomponenten-Fasern sind. Die rückseitige Verfestigung 6 ist durch thermische Verfestigung gebildet.

## Beschreibung

Die Erfindung betrifft ein Auskleidungsteil aus einem Textil mit einer rückseitigen Faserverfestigung für einen Fahrzeuginnenraum.

Nach dem Stand der Technik sind Vliesstoffe oder Velourstoffe rückseitig dadurch verfestigt, dass eine Kleberschicht oder Bindemittelschicht, typischerweise Latex, aufgetragen wird. Eine solche Verfestigung ist nötig, weil die für ein Auskleidungsteil geforderte Oberflächenfestigkeit bei einem nur mechanisch gebundenen Vliesstoff oder Velourstoff nicht gegeben ist. Beim Recyceln des Auskleidungsteils ist nachteilig, dass sich der Kleber bzw. das Bindemittel praktisch nicht von den Fasern trennen lässt, so dass sich das Recyclat nicht mehr zur Herstellung von reinen Fasern verwenden lässt. Ein weiterer Nachteil besteht darin, dass das Auskleidungsteil anfänglich unangenehme Gerüche verbreitet.

Es sind auf dem Markt Bikomponenten-Fasern bekannt (Kern-/Mantelfasern). Bei diesen besteht der Faserkern aus einem Kunststoff mit höherem Schmelzpunkt, und der Fasermantel besteht aus einem Kunststoff mit niedrigerem Schmelzpunkt. Solche Bikomponentenfasern sind sowohl als "Einstoff"-Produkt erhältlich (z.B. PET / CoPET; PA / COPA oder auch als "Zweistoff"-Fasern wie PP / PE; PET / PA etc.). Ein aus solchen Bikomponenten-Fasern hergestellter Vliesstoff lässt sich durch Temperatureinwirkung thermisch verfestigen. Dabei erfolgt die Verfestigung jedoch durch Anschmelzen des "Mantels" der Bikomponentenfasern und bindet so den Vliesstoff je nach Lage der FAsern und deren Anteile, gesamthaft oder partiell je nach Verteilung. Solche Bikomponentenfasern sind nicht nur teuer, sondern haben auch den Nachteil beim Recyceln, dass sie entweder Zweistoffsysteme sind oder als "Einstofffasern" unterschiedliche Schmelzpunkte aufweisen.

In der DE 89 09 952 U1 ist ein recyclingfähiges, textiles Ausstattungsteil, wie Bodenbelag oder Kofferraummatte, für Kraftfahrzeuge auf Polyolefinbasis beschrieben, das aus einem Textilbelag und wenigstens einer Schaumfolie besteht. Als Textilbelag ist ein Polvliesbelag auf der Basis von Polyproylen-Fasergut vorgesehen, der mit Schaumstoff aus Polyethylen kaschiert ist. Der Polvliesbelag kann mittels Polyethylenpulver vorverfestigt sein. Wenn dieses Auskleidungsteil in der Weise recycelt werden soll, dass daraus wieder sortenreine Vorprodukte aus Polypropylen einerseits und Polyethylen andererseits gewonnen werden sollen, dann müssen die aus Polypropylen und Polyethylen bestehenden Teile voneinander getrennt werden. Eine solche Trennung ist in der Praxis wirtschaftlich kaum möglich. Erfolgt die Trennung nicht, dann ist nur ein nicht sortenreines Kunststoffmaterial rückgewinnbar, in dem Polypropylen und Polyethylen gemischt sind. Ein solcher Polyolefin-Verbund ist aufgrund der schlechten Verträglichkeit von Polypropylen mit Polyethylen nur zu einem minderwertigeren Verbundprodukt wiederverarbeitbar.

Aus der DE 42 11 708 A1 ist ein Auskleidungsformteil für Kraftfahrzeuge bekannt, das derart recycelbar ist, dass das Kunststoffmaterial des Auskleidungsteils bei der Wiederverwertung Ausgangsmaterial für ein neues Auskleidungsformteil sein kann. Es bestehen hierfür sowohl die textile Deckschicht, die gewebt, gewirkt, getuftet, gestrickt oder genadelt sein kann, als auch die nicht textile Trägerschicht aus nicht vernetzendem Polypropylen. Zur Herstellung dieses Auskleidungsteils sind wenigstens zwei vorgefertigte Schichten, nämlich die textile Deckschicht und die nicht textile Trägerschicht nötig. Die Deckschicht und die Trägerschicht sind lösungsmittelfrei, thermisch miteinander verbunden.

Aufgabe der Erfindung ist es, ein Auskleidungsteil der eingangs genannten Art anzugeben, das ohne Teiletrennung sortenrein recycelbar ist, das weitgehend geruchlos ist, das preiswert herstellbar ist und dessen Oberfläche hinreichend abriebfest ist.

Erfindungsgemäß ist obige Aufgabe durch die Merkmale des Anspruchs 1 gelöst.

Ausgangsprodukt für das Auskleidungsteil ist ein Vliesstoff oder Velourstoff, der praktisch keine Bindung der Fasern durch Bindemittel oder Klebemittel aufweist, und der dementsprechend kaum abriebfest ist, und bei dem sich leicht Fasern aus dem Faserverbund lösen (Pilling). Die Fasern bestehen wenigstens überwiegend aus dem gleichen thermoplastischen Kunststoff. Die Fasern sind keine Bikomponenten-Fasern, sondern Einkomponenten-Fasern.

Die nötige und geforderte Oberflächenfestigkeit hinsichtlich Abriebs und Pillings wird durch die rückseitige thermische Verfestigung geschaffen. Hierzu werden die thermoplastischen Fasern an der Rückseite des Vorprodukts auf den Schmelzpunkt des thermoplastischen Kunststoffs erwärmt und rückseitig durch Verschmelzen verfestigt.

Das fertige Auskleidungsteil hat rückseitig infolge der dortigen thermoplastischen Verfestigung der Fasern eine glattere Struktur als im darüberliegenden Faserbereich, in dem die Fasern nicht thermoplastisch gebunden sind. Die der rückseitigen Verfestigung gegenüberliegende Oberfläche des Auskleidungsteils kann velourig, strukturiert oder glatt sein sein.

Die Materialdichte ist im Bereich der rückseitigen Verfestigung größer als im darüberliegenden Bereich. Die dem rückseitigen Verfestigungsbereich abgewandte Oberfläche des Auskleidungsteils ist abriebfest und neigt nicht zum Herauslösen von Fasern (Pilling), weil die Fasern durch die rückseitige thermoplastische Verfestigung gegenüber der am Ausgangsprodukt nur mechanischen Bindung zusätzlich miteinander verbunden sind.

Wenn eine glatte Oberfläche gewünscht ist, kann das Auskleidungsteil auch an seiner der rückseitigen Verfestigung abgewandten Oberfläche durch Wärmeeinwirkung so gestaltet sein, dass die Faserenden oberflächlich thermisch miteinander gebunden sind.

Das Auskleidungsteil ist preiswert herstellbar, weil das preiswerte Ausgangsprodukt aus preiswertem Fasermaterial nur thermisch verfestigt werden muss, wobei weitere Verfahrensschritte, wie Bindemittelaufbringung oder Kleberaufbringung, und eine zusätzliche Schicht entfallen.

Das Auskleidungsteil ist schon beim Einsetzen in den Fahrzeuginnenraum praktisch geruchlos, weil thermoplastische Fasern an sich keinen Geruch entwickeln.

Das Auskleidungsteil ist sortenrein recycelbar, weil es praktisch aus nichts anderem besteht als dem jeweils verwendeten thermoplastischen Kunststoff. Das Auskleidungsteil kann letztlich wieder zu Kunststofffasern verarbeitet werden, aus denen sich ein neues Auskleidungsteil herstellen lässt.

Die rückseitige Verfestigung des Auskleidungsteils hat auch den Vorteil, dass die rückseitige Verfestigung auch eine tragende Schicht des Auskleidungsteils bildet, wobei die tragende Schicht ein Massefaktor ist, der die Schalldämmung im jeweiligen Fahrzeuginnenraum begünstigt und durch die der Verfestigung abgewandten Seite, durch deren offene Oberfläche die Schallabsorption im Innenraum des Fahrzeugs begünstigt.

Vorzugsweise ist die Dichte des Auskleidungsteils im Bereich der thermischen Verfestigung größer als im nicht thermisch verfestigten Bereich.

In Ausgestaltung der Erfindung ist die Dicke des Bereichs der thermischen Verfestigung kleiner als die Dicke im thermisch nicht verfestigten Bereich der Fasern.

Die rückseitige Verfestigung kann derart gestaltet sein, dass sie luftdurchlässig und/oder wasserdurchlässig ist. In diesem Fall kann durch das Auskleidungsteil hindurch ein Luft- oder Dampfaustausch erfolgen.

Es genügt, die rückseitige Verfestigung nur in einzelnen Zonen vorzusehen, wobei zwischen verfestigten Zonen unverfestigte Zonen bestehen.

Der thermoplastische Kunststoff ist vorzugsweise Polypropylen oder Polyethylen. Es können jedoch auch andere thermoplastische Kunststoffe verwendet werden. Vorzugsweise besteht das Auskleidungsteil zu etwa 100% aus Polyproylen.

Vorzugsweise enthält das Auskleidungsteil im wesentlichen keine Schmelzfasern, die einen niedrigeren Schmelzpunkt aufweisen als die übrigen Fasern aus thermoplastischem Kunststoff.

Bevorzugt ist das Auskleidungsteil aus einem Nadelvlies, insbesondere Flachnadelvlies, hergestellt.

Die der Rückseite abgewandte Oberfläche kann thermoplastisch geglättet sein, wobei dann zwischen dem rückseitig thermisch verfestigten Bereich und der thermisch geglätteten Oberfläche ein volumenbestimmender Bereich besteht, in dem die Fasern nicht thermisch gebunden sind.

Ein derartiges Auskleidungsteil eignet sich insbesondere zur Verwendung in einem Fahrzeuginnenraum als Bodenverkleidung oder Kofferraumauskleidung bzw. Hutablagen und Seitenverkleidungen.

Es ist auch möglich, an der rückseitigen Verfestigung Befestigungsteile lösbar anzukleben, die der Festlegung des Auskleidungsteils im Fahrzeuginnenraum dienen. Da die rückseitige Verfestigung zugleich eine Dichtschicht bildet, besteht nicht die Gefahr, dass der Klebstoff durch die rückseitige Verfestigung zur Oberfläche durchschlägt.

Weitere vorteilhafte Ausgestaltungen der Erfindung ergeben sich aus den Unteransprüchen und der folgenden Beschreibung eines Ausführungsbeispiels. In der Zeichnung zeigen:
Figur 1 schematisch einen Ausschnitt eines Vlieses, das Ausgangsprodukt zur Herstellung eines Auskleidungsteils ist und
Figur 2 einen Ausschnitt des fertigen Auskleidungsteils.

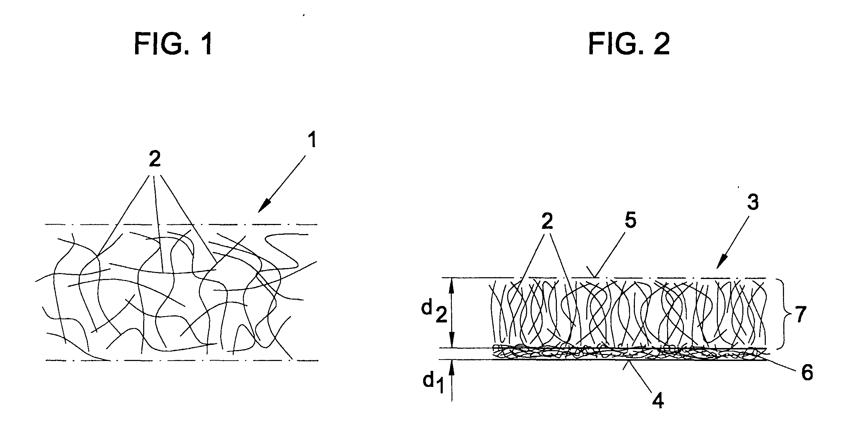

Im Vlies 1 (vgl. Fig.1), das ein Wirrvlies oder ein Nadelvlies sein kann, sind Fasern 2 mechanisch ohne Bindemittel und ohne Kleber gebunden. Anstelle des Vlieses kann auch ein Velour oder ein Gewebe oder Tuftings verwendet werden.

Die Fasern 2 bestehen überwiegend alle aus dem gleichen thermoplastischen Kunststoff, wie Polypropylen, Polyethylen, Polyamid oder einem ähnlichen thermoplastischen Kunststoff. Die Fasern 2 sind Einkomponenten-Fasern ohne unterschiedliche Schmelzpunkte (also keine Kern-/Mantelfasern). Vorzugsweise bestehen die Fasern aus 100% Polypropylen.

Im Auskleidungsteil 3 (vgl. Fig.2) sind die Fasern 2 an dessen Rückseite 4 durch thermische Behandlung miteinander verschmolzen, wodurch eine zur mechanischen Bindung zusätzliche Bindung der Fasern 2 besteht. Dadurch ist das Auskleidungsteil 3 insgesamt derart verfestigt, dass es eine gewünschte, bei dem Vlies 1 als solchem nicht gegebene Festigkeit gegen Abrieb und Pilling hat. Zugleich bildet der verfestigte Bereich 6, in dem die Fasern 2 thermisch gebunden sind, ein tragendes Element des Auskleidungsteils 3, das die Formstabilität des Auskleidungsteils 3 gewährleistet. Die Dichte (g/cm³) ist im verfestigten Bereich 6 größer als im thermisch nicht verfestigten Bereich 7. Durch die thermische Verfestigung besteht zwischen dem verfestigten Bereich 6 und dem unverfestigten Bereich 7 keine scharfe Trennschicht. Der verfestigte Bereich 6 geht in den unverfestigten Bereich 7 über. Die Dicke d1 des verfestigten Bereichs 6 ist im Regelfall kleiner als die Dicke d2 des unverfestigten Bereichs 7, damit am Auskleidungsteil 3 an der Oberseite 5 die textile Struktur erhalten bleibt. Das Verhältnis zwischen den Dicken d1 und d2 lässt sich im Verfestigungsverfahren je nach den Forderungen einstellen.

Der verfestigte Bereich 6 ist luftdurchlässig, was für die schalldämmenden Eigenschaften des Auskleidungsteils 3 hinsichtlich der Schallabsorption förderlich ist. Der unverfestigte Bereich 7 ist ohnehin luftdurchlässig. Die Luftdurchlässigkeit ist günstig, weil durch sie auch eine Wasserdampfdurchlässigkeit erreicht ist.

Der verfestigte Bereich 6 muss sich nicht an der Rückseite 4 durchgehend erstrecken. Es ist auch möglich, dass der verfestigte Bereich 6 nur in einzelnen Zonen vorgesehen ist, wobei zwischen verfestigten Zonen unverfestigte Zonen bleiben. Um die Formstabilität des Auskleidungsteils zu gewährleisten, gehen die verfestigten Zonen ineinander über.

Die Oberseite 5 des Auskleidungsteils 3 kann in der Weise strukturiert sein, dass im Muster der Struktur Fasern 2 höher bzw. tiefer enden. Diese Strukturierung lässt sich dadurch schaffen, dass die Fasern 2 im Muster der Struktur ähnlich thermisch gebunden sind, wie dies an der Rückseite 4 der Fall ist. Es ist auch möglich, die Oberseite 5 leicht abwischbar glatt zu gestalten. Es wird hierfür dann das Vlies 1 an der Oberseite 5 ähnlich thermisch verfestigt, wie an der Rückseite 4.

Das Auskleidungsteil 3 lässt sich aus dem Vlies 1 beispielsweise durch Kalandrieren herstellen. Dabei wird das Vlies 1 von einer Rolle über eine beheizte Walze geführt, die das Vlies 1 rückseitig auf die Schmelztemperatur der Fasern 2 bringt. Diese verschmelzen dadurch im Bereich 6 der Verfestigung. Um die Dicke d1 des Bereichs 6 der Verfestigung zu begrenzen, läuft das Vlies 1 nach der beheizten Walze über eine gekühlte Walze, welche den Schmelzprozess beendet. Vorzugsweise befinden sich in einem der Summe der Dicken d1 und d2 entsprechenden Abstand über den genannten Walzen Oberwalzen, die gekühlt sein können, um die Dicke d1 des zu verfestigenden Bereichs 6 zu begrenzen. Wenn eine Strukturierung oder thermoplastische Glättung der Oberseite 5 gewünscht ist, kann eine der Oberwalzen entsprechend beheizt sein.

Hinter bzw. nach den Walzen lässt sich das verfestigte Vlies 1 wieder auf eine Rolle aufwickeln. Von dieser Rolle kann dann das verfestigte Vlies 1 einer Stanzmaschine oder einer Schneidemaschine zugeführt werden, die die gewünschte Form des Auskleidungsteils 3 schafft. Es ist auch möglich, das verfestigte Vlies 1 direkt nach den Walzen einer Stanzmaschine oder Schneidemaschine zuzuführen.

Soll der Bereich 6 der Verfestigung luftundurchlässig oder wasserundurchlässig sein, dann wird das rückseitig thermisch verfestigte Vlies 1 erneut einer beheizten Walze zugeführt, wobei die im Bereich 6 schon zusammengeschmolzenen Fasern 2 erneut aufgeschmolzen und gekühlt werden, so dass nun die Rückseite 4 luftundurchlässig bzw. wasserundurchlässig wird.

Soll ein räumlich verformtes Auskleidungsteil 3 geschaffen werden, dann wird das im Bereich 6 thermisch verfestigte Vlies 1 in eine beheizte Form eingesetzt. In dieser schmilzt der thermisch verfestigte Bereich 6 erneut auf, so dass unter Pressung die gewünschte zwei- oder dreidimensionale Raumform entsteht. Eine zwei- oder dreidimensionale Raumform des Auskleidungsteils 3 kann aus dem Vlies 1 auch dadurch hergestellt werden, dass ein entsprechender Vlies-Zuschnitt in eine beheizte Form eingelegt wird.

Das beschriebene Auskleidungsteil ist vorteilhaft recycelbar, weil es wenigstens überwiegend aus dem gleichen thermoplastischen Kunststoff besteht, so dass das Recyclat wieder zu Fasern verarbeitet werden kann, aus denen ein neues Textil hergestellt werden kann.

## Patentansprüche

1. Auskleidungsteil aus einem Textil mit einer rückseitigen Verfestigung für einen Fahrzeuginnenraum,
**dadurch gekennzeichnet,**
**dass** das Auskleidungsteil(3) aus einem Vlies(1) oder Velours oder Gewebe oder einem getufteten Produkt hergestellt ist, dessen Fasern(2) im wesentlichen nur mechanisch, bindemittelfrei und klebemittelfrei gebunden sind, und bei dem überwiegend alle Fasern(2) aus dem gleichen thermoplastischen Kunststoff bestehen und Einkomponnenten-Fasern sind, und dass die rückseitige Verfestigung(6) und/oder eine oberseitige Verfestigung(5) durch vollflächige oder partielle thermische Verfestigung gebildet ist.

2. Auskleidungsteil nach Anspruch 1,
**dadurch gekennzeichnet,**
**dass** die Dichte im Bereich(6) bzw. Oberseite(5) der thermischen Verfestigung größer ist als die Dichte im nicht thermisch verfestigten Bereich(7).

3. Auskleidungsteil nach Anspruch 1 oder 2,
**dadurch gekennzeichnet,**
**dass** die Dicke(d1) des thermisch verfestigten Bereichs(6,5) kleiner ist als die Dicke(d2) des thermisch nicht verfestigten Bereichs(7).

4. Auskleidungsteil nach einem der vorhergehenden Ansprüche,
**dadurch gekennzeichnet,**
**dass** das Auskleidungsteil(3) im thermisch verfestigten Bereich(6) derart verfestigt ist, dass das Auskleidungsteil(3) an der Oberseite(5) eine hinreichende Festigkeit, insbesondere Abriebfestigkeit und Festigkeit gegen Herauslösen von Fasern(2), aufweist.

5. Auskleidungsteil nach einem der vorhergehenden Ansprüche,
**dadurch gekennzeichnet,**
**dass** die Verfestigung luftdurchlässig und/ oder wasserdurchlässig ist.

6. Auskleidungsteil nach einem der vorhergehenden Ansprüche,
**dadurch gekennzeichnet,**
**dass** die Verfestigung nur in einzelnen Zonen vorgesehen ist, wobei zwischen verfestigten Zonen unverfestigte Zonen bestehen.

7. Auskleidungsteil nach einem der vorhergehenden Ansprüche,
**dadurch gekennzeichnet,**
**dass** der thermoplastische Kunststoff Polypropylen oder Polyethylen ist.

8. Auskleidungsteil nach Anspruch 7,
**dadurch gekennzeichnet,**
**dass** das Auskleidungsteil(3) zu etwa 100% aus Polypropylen besteht.

9. Auskleidungsteil nach einem der vorhergehenden Ansprüche,
**dadurch gekennzeichnet,**
**dass** das Auskleidungsteil(3) im wesentlichen keine oder keine Schmelzfasern enthält, die einen niedrigeren Schmelzpunkt aufweisen als die übrigen Fasern.

10. Auskleidungsteil nach einem der vorhergehenden Ansprüche,
**dadurch gekennzeichnet,**
**dass** das Auskleidungsteil(3) aus einem Nadelvlies(1) hergestellt ist.

11. Auskleidungsteil nach einem der vorhergehenden Ansprüche,
**dadurch gekennzeichnet,**
**dass** die der Rückseite(4) abgewandte Oberseite(5) ein Polvlies, ein Gewebe, Gewirke oder ein getuftetes Produkt ist.

12. Auskleidungsteil nach einem der vorhergehenden Ansprüche,
**dadurch gekennzeichnet,**
**dass** die der Rückseite(4) abgewandte Oberseite(5) strukturiert ist.

13. Auskleidungsteil nach einem der vorhergehenden Ansprüche,
**dadurch gekennzeichnet,**
**dass** die der Rückseite(4) abgewandte Oberseite(5) thermoplastisch geglättet oder strukturiert ist.
